Europäisches Patentamt

European Patent Office

Office européen des brevets

(11) Publication number: 0 520 173 A2

# EUROPEAN PATENT APPLICATION

(21) Application number: 92107897.8

(22) Date of filing: 11.05.92

(51) Int. Cl.5: G06F 1/18

(30) Priority: 21.06.91 US 719184

(43) Date of publication of application:
30.12.92 Bulletin 92/53

(84) Designated Contracting States:
AT DE ES FR GB

(71) Applicant: TANDON CORPORATION
301 Science Drive
Moorpark, CA 93021(US)

(72) Inventor: Batta, Krishnan Kumar
20326 Hemmingway Street
Canoga Park, California 91306(US)
Inventor: Beijer, Gene
4223 Laurel Glen Drive
Moorpark, California 93021(US)
Inventor: Shakibai, Ghodratolla
12313 Arbor Hill Street
Moorpark, California 93021(US)

(74) Representative: Strehl, Schübel-Hopf,
Groening
Maximilianstrasse 54 Postfach 22 14 55
W-8000 München 22(DE)

(54) Computer housing.

(57) A computer housing comprises a fascia attached to the front of a body. The body comprises disc drive bays (40, 122) and a processor bay (44). The processor bay (44) accommodates a processor module containing a processor and immediately associated circuits which plugs into a connector board using rigid connectors. The processor module shields the processor from electromagnetic interference and properly grounds it, and can easily be removed from the computer housing without disassembly, allowing convenient access to the processor. The disc drive bays (40, 122) are configured to provide for easy installation and removal of the disc drives.

FIG. 3

## FIELD OF THE INVENTION

The present invention relates to the field of computer housings, and particularly to computer housings having removable modules.

## BACKGROUND OF THE INVENTION

The typical personal computer is housed in a rectangular enclosure, which usually has two relatively large dimensions (width and depth in a desk top model). The enclosure protects the computer components, provides shielding against radio frequency interference and often provides physical support for other components of the computer system, such as a display. Some personal computers are integrated with a display, keyboard, or both in a single enclosure.

The central processor unit (CPU), including the processor(s), is usually on a motherboard which physically spans a large part of the two major dimensions of the enclosure, usually at the bottom of a desk top personal computer. Accessory circuits, such as input/output interface and additional memory, stand perpendicular to and plug into right angle bus connectors on the motherboard. Often one or more accessory boards or a disk drive overlies the processor, requiring removal of the boards or drive to access the processor on the motherboard. In some systems, no motherboard is employed. The complete CPU, including the processor(s), and accessory circuits are each on printed circuit boards which are plugged into and connected by the bus of a "backplane." Unlike a motherboard, a backplane does not include major functional components.

In the typical personal computer, disassembly of the enclosure is required to access the processor(s), usually by lifting a cover or sliding it forward. Removal of any component resting on the computer enclosure is required. Progress in this field has been directed primarily to use of internal processor or co-processor circuit boards which plug into the motherboard or backplane, and to means for opening and closing the enclosure without the use of tools, as in the IBM PS-2 series personal computers.

Additionally, installation and removal of disc drives into and out of personal computers is often cumbersome, especially if the disc drive does not fit the exact dimensions of the drive bay.

## OBJECTS AND SUMMARY OF THE INVENTION

It is therefore an object of the present invention to ease installation and removal of a processor in a personal computer, while providing adequate cooling and radio frequency interference protection.

It is a further object of the invention to provide convenient, frontal access to modularly housed disc drives and processors in a computer.

It is a further object of the invention to provide a convenient means for installing a relatively small disc drive into a larger disc drive bay.

According to a principal aspect of the present invention, a shielded, removable processor module is provided which can be removed from the front of the personal computer without disassembly of the enclosure. The processor module contains a microprocessor and immediately associated circuits, but other significant CPU components are not included in the module and are located within the computer's enclosure. Further details of electronic circuits suitable for use in a module in accordance with this invention are set forth in the U.S. patent application of David Kummer entitled "COMPUTER BUS TRANSLATION METHOD AND APPARATUS," Serial No. 07/717334, filed on 18 June 1991 and commonly assigned to the assignee hereof, the entire contents of which are incorporated herein by reference as though fully set forth herein.

According to a further aspect of the invention, a computer housing comprises a body, a disc drive bay disposed in said body for accomodation of a disc drive, the disc drive being adapted for convenient installation into and removal from said disc drive bay, and stops disposed at the rear of the bay to prevent the disc drive from entering the bay overfar. Receiving rails disposed on the sides of the bay guide and align the disc drive in the bay, and a latching hole disposed at the front of the bay cooperates with a male latching member on the disc drive for the latching of the disc drive in the bay.

According to another aspect of the invention, a computer housing comprises a disc drive bay containing guide rails, a rear clip port, and a front latch opening disposed in the bay for accomodation of a disc drive conversion tray. The tray comprises a rear clip for placement in the rear clip port, a front clip for attachment to the front of the bay, and a resilient male latch member for engagement with the front latch opening.

## BRIEF DESCRIPTION OF THE DRAWINGS

These and other objects, aspects, and embodiments of the present invention will be described with reference to the following drawing figures, of which:

FIG. 1 is a perspective view of an example of a computer housing according to the invention, showing the front of the fascia;

FIG. 2 is a rear elevational view of the fascia of FIG. 1 disconnected from the rest of the computer housing;

FIG. 3 is a front elevational view of the computer housing of FIG. 1 without the fascia, and with the disc drive bays covered by shields and the processor module installed;

FIG. 4 is a perspective view of a latch used to connect the fascia of FIG. 1 to the rest of the computer housing;

FIG. 5 is a perspective view of a disc drive bay shield shown in FIG. 3;

FIG. 6 is a front elevational view of the computer housing of FIG. 1 without the fascia, and with the shields and processor module removed;

FIG. 7 is a side view in cross-section along line 7-7 in FIG. 6;

FIG. 8 is a top view in cross-section along line 8-8 in FIG. 6;

FIG. 9 is a bottom view in cross-section along line 9-9 of FIG. 6;

FIG. 10 is a top view in cross-section along line 10-10 in FIG. 3;

FIG. 11 is an exploded perspective view of a processor module for use with the computer housing of FIG. 1;

FIG. 12 is a rear elevational view of the processor module of FIG. 11;

FIG. 13 is a side view in cross-section along line 13-13 in FIG. 6;

FIG. 14 is a perspective view of a disc drive tray used with the disc drive bays in the computer housing of FIG. 1; and

FIG. 15 is a bottom plan view of the disc drive tray of FIG. 14.

## DETAILED DESCRIPTION OF THE INVENTION

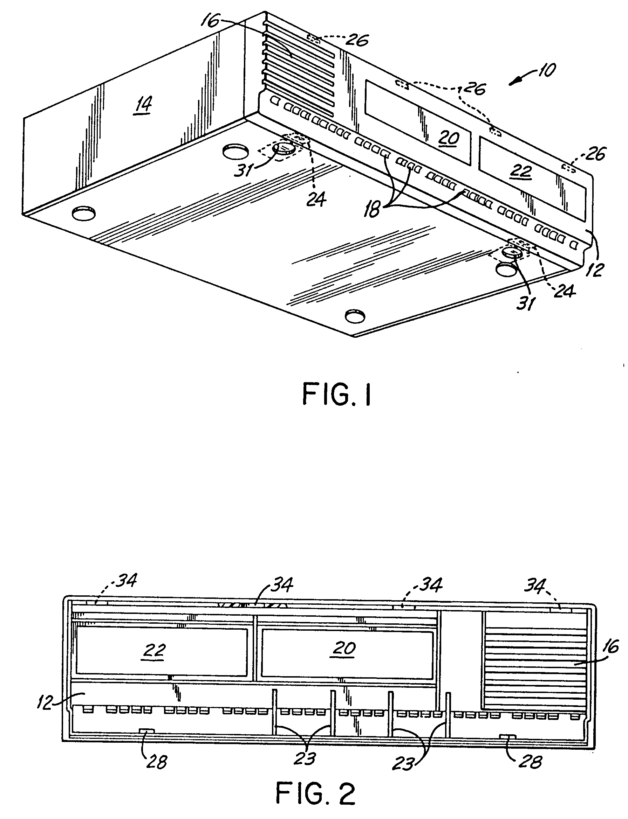

Referring first to Figs. 1 to 5, one embodiment of a computer housing 10 according to the invention comprises a fascia 12 attached to a body or casing 14. The fascia 12 is constructed of plastic, and the body 14 is largely constructed of commonly available low carbon steel in the preferred embodiment. The front of the fascia 12 contains a louvered ventilation panel 16 and lower vents 18. Two entrance openings 20 and 22 provide access to disc drives in the body 14. Ribs 23 are provided on the side of the fascia 12 facing the body 14 for rigidity (Fig. 2).

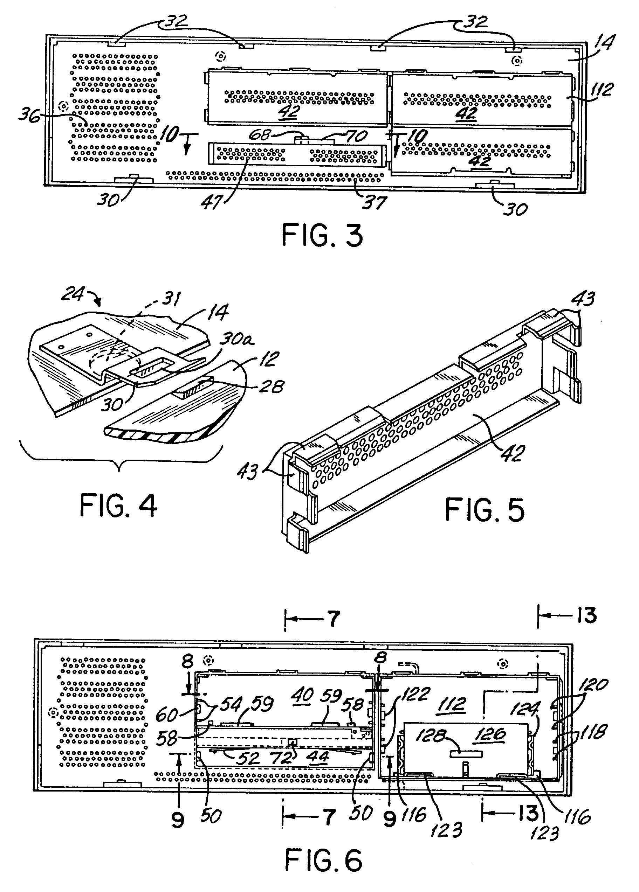

The fascia 12 is attached to the body 14 by means of latch assemblies 24 and anchor assemblies 26. As shown in detail in Fig. 4, the latch assemblies 24 comprise male latching members 28 extending up from the bottom of the fascia 12, which latch with female latching members 30 attached to the body 14. The female latching members 30 comprise plates extending out from and resiliently attached to the lower portion of the body 14 which contain holes 30a. As shown in Fig. 1, the bottom of the body 14 is cut away at portions 31 to allow a user to urge the female latching members 30 upwardly. The anchor assemblies 26 comprise male anchor protrusions 32 extending down from the top of the body 14 (Fig. 3) which engage female anchor holes 34 disposed on the top of the fascia 12 (Fig. 2).

To attach the fascia 12 to the front of the body 14, the anchor holes 34 are placed over the anchor protrusions 32, and the male latching members 28 are slid underneath the female latching members 30, the female members being deflected slightly, until the male members 28 reach the holes 30a, whereupon the female members 30 snap onto the male members 28, securely latching the fascia 12 to the body 14. To disengage the latching members 28 and 30, the female members 30 are urged upwardly at portions 31, thus allowing the male latching members 28 to disengage from the holes 30a. The anchor protrusions 32 are then disengaged from the anchor holes 34, and the fascia 12 is removed from the body 14.

The location of the anchor assemblies 26 and latch assemblies 24 is not critical. Their positions could be reversed, or be located on the sides of the housing instead of the top and bottom thereof.

As shown in Fig. 3, the front of the body 14 comprises a ventilation panel 36, consisting of a series of perforations disposed behind the louvered panel 16 when the fascia 12 is in place. A second ventilation panel 37 is disposed in the lower portion of the body 14. A 1/2 height disc drive bay 40 is disposed adjacent to the ventilation panel 36. When a disc drive is not installed in the bay 40, or when a drive that does not require frontal access, such as a hard disc drive, is installed in the bay 40, a perforated metal shield 42 is placed over the bay 40 and secured by clips 43 in the preferred embodiment (Fig. 5). If frontal access is not required through the fascia 12, a plastic piece can be used to cover the opening 20.

Referring now to Figs. 6 to 8, the bay 40 contains receiving rails 54 which comprise metal flaps cut out from and forming right angles with the side walls of the bay to hold a disc drive, or to hold a mounting device attached to the sides of the disc drive. Protrusions or stops 60 are disposed at the rear of the bay 40 to arrest rearward movement of the disc drive. This invention is particularly suitable for use in combination with a mounting device described in our U.S. patent application entitled "DEVICE FOR MOUNTING COMPUTER COMPONENTS," serial no. 07/718,604, filed on even date with this application and commonly assigned to the assignee hereof, the entire contents of which are incorporated herein by reference as though fully set forth herein.

The top and bottom of the bay 40 are perforated for ventilation. Guides 58 are provided at the bottom of the bay 40 to guide a drive tray into the bay (described below). Clip ports 59 for receiving a drive tray are disposed at the rear of the bay 40. Latch holes 61 are disposed near the front of the sides of the bay 40. Recesses 63 and a bottom latch hole 65 are disposed on the bottom and near the front of the bay 40. A disc drive inserted into the bay 40 is electrically connected to the computer by any suitable means, such as a cable connection.

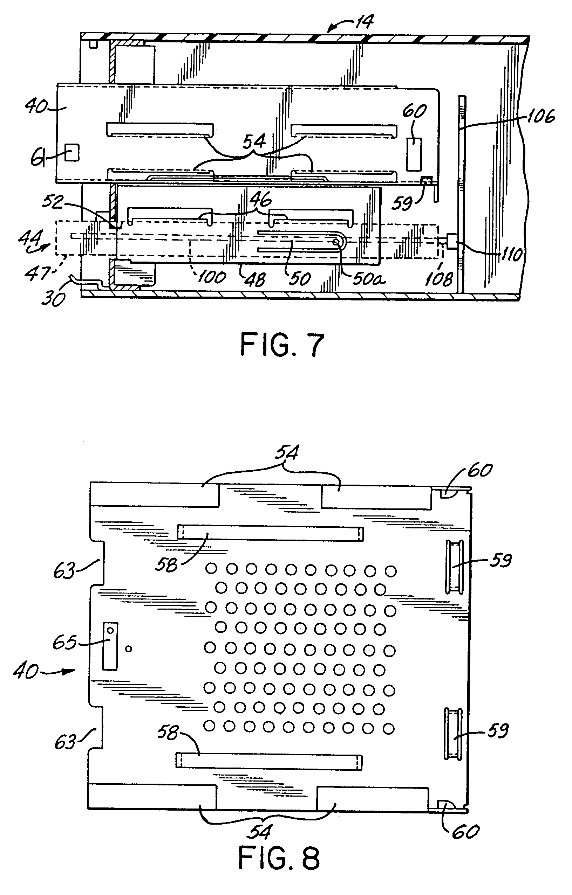

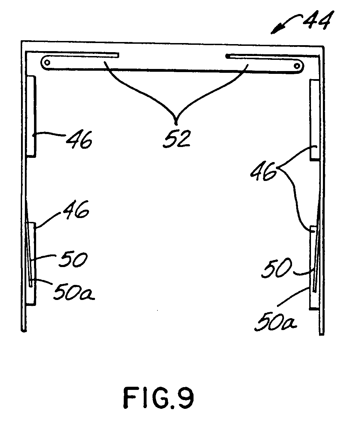

Referring to Figs 6, 7, and 9, a modular processor bay 44 is disposed below the disc drive bay 40. The processor bay 44 contains upper receiving rails 46 which comprise metal flaps cut out from and forming right angles with the side walls of the bay 44 to press against the top of a removable processor module or casing 47, shown in phantom in Fig. 7 and further described below. A lower receiving rail 48 is constructed by folding up the lower edges of the side walls of the bay 44 at a right angle to press against the bottom of the processor module 47. A side pressure spring 50 is disposed in each side of the bay 44 and comprises a relatively long and narrow flap cut out of the side of the bay 44. The spring 50 serves to center align the module 47 and ground it to the body 14; a grounding protrusion 50a is disposed on the end of the flap for that purpose. As a result of their shape and attachment configuration, the springs 50 are somewhat resilient and press against the sides of the processor module 47, keeping the latter continuously grounded. As shown most clearly in Fig. 9, similar pressure springs 52 are disposed on the top of the bay 44 to press against the top of the processor module 47.

Pressure springs such as springs 50 and 52 may be useful for other purposes, such as ensuring that the computer cover is properly grounded to the chassis.

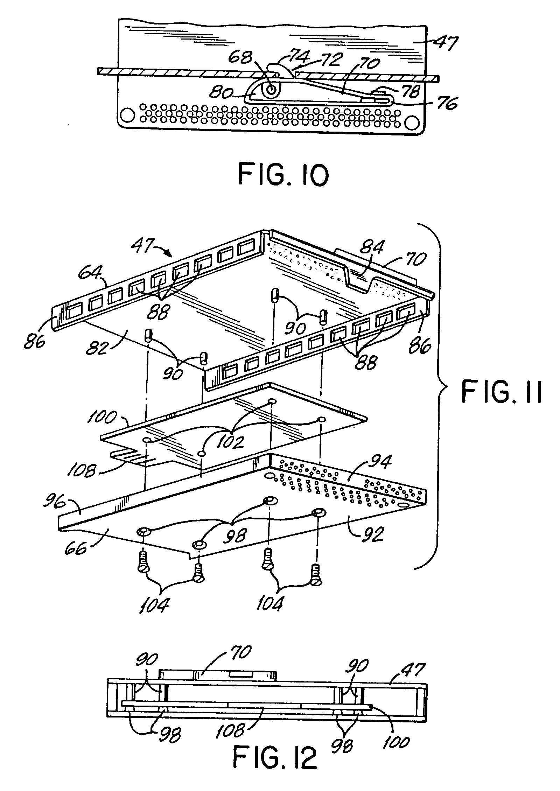

Referring now to Fig. 10, the processor module 47 has a protrusion 68 disposed on its top which attaches to a locking cam assembly 70. The cam assembly 70 cooperates with a latch hole 72 in the front of the body 14 and just above the bay 44 to lock the processor module 47 into the bay 44. The assembly 70 comprises a latch hook 74 adjacent to the protrusion 68, a lever 76 extending from the area of the protrusion 68 which enables a user to rotate the cam assembly 70 around the protrusion 68, and a cam 80 opposite the lever 76. When the lever 76 is rotated counter-clockwise, the hook 74 enters the hole 72 and secures the processor module 47 against movement. A stop 78 disposed on the module 47 delimits the movement of the lever 76. When the lever 76 is rotated clockwise, the hook 74 exits the hole 72 while the cam 80 pushes against the body 14, causing the processor module 47 to emerge from the bay 44 slightly, enabling the hook 74 smoothly to exit the hole 72. The processor module 47 is thereby disengaged, and can be removed from the bay 44.

When the module 47 is in place in the bay 44, the former protrudes slightly from the latter. The module 47 has vent perforations through its front and the protruding portion of its top and bottom for cooling of the processor.

Referring now to Figs. 11 and 12, the processor module 47 comprises a top piece 64 and mating bottom piece 66 and houses a board 100 containing a processor and immediately associated circuits. The module 47 shields the board 100 from radio frequency interference. The module 47 is closed on its front and sides, but open in the back to allow the processor board 100 to connect to the rest of the computer by means of a connector 108. The top piece 64 comprises a rectangular top 82 having a front spacer 84 and side walls 86. As mentioned above, the forward portion of the rectangular top 82 is perforated for ventilation and cooling. The side walls 86 are not solid, rather, they contain rectangular openings 88 to give a measure of resiliency to the side walls 86 in order to help them fit tightly into the bottom piece 66. Four standoff extensions 90 depend downwardly from the rectangular top 82 parallel to the side walls 86 and front spacer 84, and are attached to the top 82 in such a manner that the opposite side of the top 82 is smooth in order to provide for smooth installation and removal of the processor module 47 from the bay 44 without catching or scratching.

The bottom piece 66 of the processor module 47 comprises a rectangular bottom 92, a front wall 94, and side walls 96. As mentioned above, the forward portion of the rectangular bottom 92 and the front wall 94 are perforated for ventilation and cooling. The side walls 96 are located such that the side walls 86 of the top piece 64 will fit snugly inside them. Four extrusions or opposing extensions 98 protrude from the rectangular bottom 92, and are located directly below the standoff extensions 90 such that a narrow space separates them when the top and bottom pieces 64 and 66 are placed together.

The processor board 100 has mounting holes 102, and is mounted in the module 47 by placing it between the standoff extensions 90 and the extrusions 98 such that the mounting holes 102 are aligned with the standoffs 90 and the extrusions 98. Bolts 104 go through the extrusions 98 and mounting holes 102 and screw into the standoffs 90, firmly securing the top and bottom pieces 64 and 66 to each other and to the board 100.

Referring to Fig. 7, the processor board 100, shown in phantom, plugs into a connector board 106 by means of a rigid connector 108 extending from the rear of the processor board 100 through the open end of the module 47. The connector board 106, mounted on and perpendicular to the base of the body 14, has a rigid right angle connector 110 placed to come into engaged relationship with the connector 108. As mentioned above, the side and top pressure springs 50 and 52 of the processor bay 44 help to center align the module 47 to enable the connectors 108 and 110 to properly engage each other.

The above-described arrangement of the board 100 in the module 47 and its connection to the connector board 106 provides for a shielded, removable processor module which can be removed from the front of the body 14 without any disassembly of the body 14 or components therein. In a preferred embodiment, the processor board 100 contains the processor and immediately associated circuits, while the connector board 106 contains the remainder of circuits, not in the board 100, which are usually contained in a conventional motherboard.

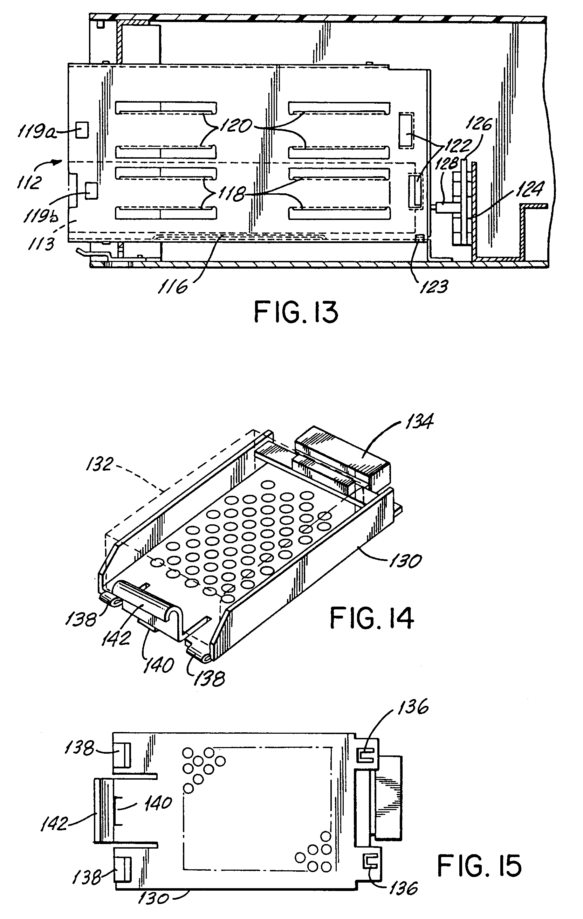

Referring now to Figs. 6 and 13, a full height disc drive bay 112 is disposed adjacent to the disc drive bay 40 and processor bay 44. While the whole of the bay 40 corresponds with the opening 20 in the fascia 12 to allow frontal access to the disc drive 41, only the upper portion of the bay 112 corresponds with the opening 22 in the fascia 12, allowing frontal access to only the upper portion of the bay. A hard disc drive 113 is preferably placed in the lower portion of the bay 112, since the lower portion of the bay 112 is not accessible through the fascia 12. A perforated shield 42, therefore, will usually be in place in front of the lower portion of the disc drive bay 112, but is not shown in Figs. 6 and 13.

Like the bay 40, the top and bottom of the bay 112 are perforated for ventilation and cooling. Guides 116 are disposed on the bottom of the bay 112 in the same manner and for the same purpose that guides 58 are disposed on the bottom of the bay 40. Similarly, receiving rails 118, of similar construction to the receiving rails 54, are disposed on the lower portion of the walls of the bay 112 to accommodate a disc drive in the lower portion of the bay 112. Receiving rails 120 are disposed in the upper portion of the bay 112 to accommodate a disc drive in the upper portion of the bay 112. Protrusions or stops 122 are disposed at the rear of the bay 112 to prevent undesired rearward movement of the disc drives, and latch holes 119a and 119b are disposed on the upper and lower frontal portions of the side walls of the bay 112. The latch holes 119b are placed slightly rearward of the latch holes 119a so that the disc drive 113 in the lower part of the bay 112 will fit behind the fascia 12, which has no opening for it. A bottom latch hole, and recesses, which are not shown but are identical to the bottom latch hole 65 and recesses 63 shown in Fig. 8, are disposed on the bottom frontal portion of the bay 112. Clip ports 123, identical to clip ports 59 in Fig. 8, are disposed at the bottom rearward portion of the bay 112.

A card guide 124 of conventional construction is disposed at the rear of the lower portion of the bay 112, into which a connector card 126 can be placed. The connector card 126 has a rigid right angle connector 128 which plugs into the rear of a disc drive 113, shown in phantom in Fig. 13, enabling easy installation and removal of the disc drive 113. The disc drive in the upper portion of the bay 112 is connected to the computer by any suitable means, such as a cable connector.

In the preferred embodiment, the disc drive bays 40 and 112 are adapted to accommodate 5.25 inch disc drives, but can be made to accommodate 3.5 inch drives by means of a drive conversion tray 130, shown in Figs. 14 and 15. The drive tray 130 may be installed in the bay 40 or the bottom of the bay 112; it will be described in conjunction with installation in the bay 40, but the description also applies to installation in the bottom of the bay 112. A 3.5 inch disc drive 132, shown in phantom in Fig. 14, is secured into the drive tray 130 by any suitable means, such as bolts, adhesive, or the like. The connector of the disc drive 132 itself may be used to connect to the computer, or its connector may be plugged into a transition connector 134 disposed at the rear of the tray 130 which plugs into the computer. Rear clips 136 are disposed at the rear of the drive tray 130, and are adapted to fit into the clip ports 59 at the rear of the bay 40. Front clips 138 clip onto the front of the bay 40 in the recesses 63. A front center portion of the tray 130 is cut out to give it a measure of resiliency, and a protrusion 140 is disposed on the cut out portion. The protrusion 140 engages the bottom latch hole 65 in the bay 40 when the tray 130 is fully installed, and secures the tray firmly therein. A handle 142 is disposed at the front of the tray 130. The tray 130 is removed from the bay 40 by grasping the handle 142 and lifting it up, causing the protrusion 140 to disengage the bottom latch hole 65 and enabling the tray 130 to be removed from the bay 40. The bottom of the tray 130 is perforated to provide ventilation.

If desired, an internally mounted disc drive may be installed in the body 14 in addition to the drives installed in the bays 40 and 112. The tray 130 may be useful in facilitating the installation of such a disc drive.

A cooling fan, not shown, is disposed at the rear of the body 14 to cool the computer components contained in the body 14. The fan causes air to be drawn into the housing 10 by means of the louvered panel 16 and vents 18 in the fascia, which air then enters the body 14 to cool the components therein. The air passes through the ventilation panel 36 to cool the power supply and other components of the computer (not shown), and through any perforated shields 42 which may be disposed at the front of the bays 40 and 112. The air which passes through the shields 42, or merely through the spaces at the top and bottom of the disc drives contained in the bays 40 and 112, then passes through the perforations in the top and bottom of the bays and through the open back of the bays, effectively cooling the disc drives. To cool the processor board 100, the air passes through the perforations 62 at the front of the module 47 and the ventilation panel 37, and on through the open back of the module 47.

It will be understood that the foregoing description discloses a specific embodiment which is illustrative of the present invention, and that it may be modified or changed while remaining within the scope of the invention, which is defined by the following claims.

**Claims**

1. A computer housing comprising:
   a body (14);
   a processor module bay (44) disposed in said body (14);
   a processor module (47) adapted for installation into and removal from said module bay (44);
   a processor board (100) disposed in said module, which board connects to said computer through said module;
   means (46, 48, 50, 52) for grounding said module (47) to said body (14), whereby said module shields said board (100) from electromagnetic interference.

2. The computer housing of claim 1, wherein said processor module comprises a metal casing (64, 66) substantially surrounding said processor board (100) and an opening through which said processor board (100) connects to said computer.

3. The computer housing of claim 2, further comprising at least one first offset extension (90) depending from an inside surface of said metal casing (64) and at least one opposing second extension (98) depending from an opposing inside surface of said metal casing (66), whereby said processor board (100) is secured between said first and second extensions.

4. The computer housing of claim 1, wherein said processor module (47) is ventilated for cooling of said processor board (100) disposed therein.

5. The computer housing of any of claims 1 to 4, wherein said processor module (47) comprises a substantially rectangular first piece (64) and a substantially rectangular second piece (66) which fit together, said first piece (64) having first dependent side members (86) which fit snugly into corresponding second dependent side members (96) of said second piece (66), and further comprising a dependent front spacer (84) on said first piece (64) which fits into a dependent front piece (94) on said second piece (66).

6. The computer housing of claim 5, wherein holes are disposed in said first dependent side members (86) to give the latter a measure of resiliency.

7. The computer housing of any of claims 1 to 6, further comprising a connecting board (106) disposed approximately at right angles from said processor module (47) and said processor board (100), and wherein said processor board (100) connects to said connecting board (106) through the rear of said processor module (47) by a rigid connector (108).

8. The computer housing of any of claims 1 to 7, wherein said means for grounding said module to said body comprises a pressure spring (52) extending from a wall of said processor module bay (44) and contacting said processor module (47).

9. A computer housing comprising:
   a body (14);
   a processor module bay (44) disposed in said body (14);
   a processor module (47) comprising a casing (64, 66) surrounding a processor board (100) for shielding the latter from electromagnetic interference, and an opening whereby said processor board (100) can connect to another board (106) disposed in said computer housing (14);
   means (90, 104) for securing said processor board (100) in said processor module (47);
   a pressure spring (52) disposed in said processor module bay (44) for aligning and grounding said processor module (47);
   means for latching said processor module (47) to said processor module bay (44).

10. The computer housing of claim 9 wherein said casing comprises a top piece (64) having disposed thereon at least one standoff extension (90), and a bottom piece (66) having disposed thereon at least one extrusion (98) adapted to be located opposite said standoff extension (90), whereby said pro-cessor board (100) is secured between said standoff extension and said extrusion.

11. The computer housing of claim 10 wherein said top piece (64) has a front spacer (84) and resilient side walls (86), and wherein said bottom piece (66) has side (96) and front walls (94) into which said front spacer (84) and resilient side walls (86) fit snugly.

12. The computer housing of any of claims 9 to 11 further comprising ventilation performations disposed in the front (94) of said casing, and wherein said opening comprises an open rear section of said casing.

13. The computer housing of claim 1 or 9 further comprising a disc drive bay (40) disposed in said body (14), which disc drive bay (40) contains receiving rails (54) and a latch hole (61) disposed in its side walls.

14. The computer housing of claim 1 or 9 further comprising a disc drive bay (40) disposed in said body (14) and a shield (42) used to close said disc drive bay (40) to protect a disc drive inserted therein from electromagnetic interference.

15. The computer housing of claim 14 wherein said shield (42) is perforated for ventilation.

16. A computer housing comprising:
a body (14);
a fascia (12) adapted to be removably attached to the front of said body (14);
a latch assembly (24) comprising a female latch member (30) protruding from said body (14) and a male latch member (28) disposed on said fascia (12), wherein said female latch member (30) is manually deflected to release said male latch member (28) to remove said fascia (12) from the front of said body (14).

17. The computer housing of claim 16 wherein said body (14) contains a processor module bay (44) into which a removable processor module (47) fits.

18. A processor module (47) for use in a module bay (44) comprising:
a casing having an open end, comprising first (84) and second (66) pieces adapted to fit together;

at least one first protrusion (90) extending from said first piece (64);
at least one second protrusion (98) extending from said second piece (66) disposed opposite said first protrusion when said first and second pieces are fitted together;
a processor board (100); and
means (104) for securing said first (90) and second (98) protrusions to one another with said processor board (100) between them, said processor board (100) being provided with a connector (108) for connecting said processor board to a connector board (106) through said open end of said casing;
a cam assembly (74, 76, 80) disposed on said first piece (64) which cooperates with a latch hole (72) in said module bay (44) to removably secure said processor module (47) into said module bay (44).

19. The processor module of claim 18, wherein said connector (108) is rigid enabling said processor module (47) easily to be installed into an removed from said module bay (44).

20. A computer housing comprising:
a body (14);
a disc drive bay (40, 120) disposed in said body (14) for accomodation of a disc drive, said disc drive being adapted to be conveniently installed into and removed from said disc drive bay;
stops (60, 122) disposed at the rear of said bay to prevent said disc drive from entering said bay overfar;
receiving rails (34, 118, 120) disposed on the sides of said bay to properly guide and align said disc drive in said bay;
a latching hole (61, 119) disposed at the front of said bay for cooperation with a male latching member on said disc drive for the latching of said disc drive in said bay.

21. The computer housing of claim 20 further comprising a card guide (124) disposed at the rear of said bay (40, 122) for the installation of a connector card adapted to plug into said disc drive when the latter is installed in said bay.

22. The computer housing of claim 20 or 21, further comprising a processor module bay (44) disposed in said body (14) into which a processor module (47) containing a processor and immediately associated circuitry can be installed, and means for connecting said processor modul (47) to other components in said computer housing (14).

**23.** The computer housing of any of claims 20 to 22, wherein said processor module (47) comprises a casing surrounding a board (100) containing said processor and associated circuitry, and further comprising means (50a) for grounding said processor module (47) to said body (14).

**24.** The computer housing of the preceding claims, further comprising guide rails (116), a rear clip port (59), and a front latch opening (65) disposed in said disc drive bay for accomodation of a disc drive conversion tray (130).

**25.** The computer housing of claim 24, wherein said disc drive conversion tray (130) comprises a rear clip (136) for placement in said rear clip port (59), a front clip (138) for attachment to the front of said disc drive bay (40, 122) and a resilient male latch member (140) for engagement with said front latch opening (65).

**26.** The computer housing of claim 24, further comprising a handle (142) disposed on the front of said conversion tray (130).

**27.** A computer housing comprising:

a fascia (12), comprising a louvered panel and two disc drive access openings (20, 22);

a body (14) to which said fascia (12) is attached;

a ventilation panel (16) in said body disposed behind said louvered panel;

a half height disc drive bay (40) disposed adjacent to said ventilation panel (16);

a processor module bay (44) disposed below said half height disc drive bay (40), containing a pressure spring (52) disposed on a wall thereof for resiliently contacting and aligning and grounding a processor module (47) installed in said processor module bay (44);

a processor board (100) secured in said processor module bay (44);

said processor module (47) comprising a top piece (64) and a bottom piece (66), said top and bottom pieces fitting together and securing said processor board (100) between them by means of standoff extensions (90) protruding from said top piece and extrusions (98) extending from said bottom piece;

a connector (108) disposed on said processor board (100) for connection into said computer;

a full height disc drive bay (122) disposed adjacent to said half height disc drive bay (40) and said processor module bay (44), comprising a plurality of sets of receiving rails (118, 120) and latch holes (119) for the installation of a plurality of disc drives.

**28.** The computer housing of claim 27, further comprising a disc drive conversion tray (130) and means for securing (136, 138) and connecting (134) said conversion tray into said full height disc drive bay (122) or said half height disc drive bay (40).

FIG. 1

FIG. 2

FIG. 3

FIG. 4

FIG. 5

FIG. 6

FIG. 7

FIG. 8

FIG.9

FIG. 10

FIG. 11

FIG. 12

FIG. 13

FIG. 14

FIG. 15